# EUROPEAN PATENT APPLICATION

(11) **EP 0 649 709 A2**
(43) Date of publication of application: **26.04.1995**
(21) Application number: 94307828.7
(22) Date of filing: 25.10.1994
(51) Int. Cl.: B25J 9/16, G05D 1/02

(54) **Device for moving a mobile robot**

(30) Priority: 25.10.1993 JP 266647/93
(71) Applicant: International Business Machines Corporation, Armonk, N.Y. 10504 (US)
(72) Inventor: Echigo, Tomio, Yokohama-shi, Kanagawa-ken (JP); Ishikawa, Shigeki, Shinagawa-ku, Tokyo (JP); Asaka, Shunichi, Sagamihara-shi, Kanagawa-ken (JP); Hazeki, Shinichiro, A-506 Miyamaedaira Sunny-hill, Miyamae-ku, Kawasaki-shi, Kanagawa-ken (JP)
(74) Representative: Davies, Simon Robert

(57) **Abstract**

The present invention relates to a device for moving a robot safely and effectively according to the surrounding environment. Data relating to the surrounding environment is obtained from a plurality of different sensors. Sonar data given as distance information for an object is used to interpret the surface configuration of an object at a sonar interpretation section. Three-dimensional information comprising stereo data based on image signals from stereo cameras is used to interpret the surface configuration of an object at the stereo interpretation section. At the hypothesis generation section, a geometrically consistent interpretation is used taken from interpretations obtained from each sensor to generate a hypothesis giving the configuration of an object. A table is used to determine which data is assigned priority, sonar or stereo, to check sensor data corresponding to the surface configuration of the hypothesis against actual sensor data with the passage of time to verify the hypothesis. The mobile robot moves to avoid an obstacle, or its movement is directed, in accordance with the hypothesis with respect to the current environment by referencing the run route.

## Description

The present invention relates to a device for moving a robot and, more particularly, to a device for moving a robot based on the surrounding environment.

Mobile robots are used in manufacturing plants to transport loads. Many such mobile robots either move along a given run guide such as a rail or provide a detector (herein referred to as an inside angle sensor) for detecting the run distance in accordance with a route stored in the mobile robot in advance to enable it to move based on detected values. Some mobile robots have detectors such as ultrasonic wave sensors to avoid obstacles present in the direction of movement of the mobile robot or to detect the status of surroundings by using a bumper (fender) to detect the obstacle based on data (herein referred to as sensor data) on detected values used to avoid obstacles.

In addition, also recently available are independent mobile robots that move within a free range. These independent robots must be able to recognize the surrounding environment to enable them to operate safely and efficiently. Consequently, different types of sensor must be provided to detect a plurality of different states to enable mobile robots to move and run safely and efficiently.

Such different sensors have features that differ with the sensor. Consequently, it is possible that sensors obtaining sensor data in the same measurement unit with respect to the same object may generate contradictions in the configuration of a scene interpreted from sensor data. The configuration of a scene referred to herein means an environment established in the structure, including artificial objects and natural objects that can be detected by independent mobile robots.

For example, in an attempt of obtaining distance information with respect to an object with different sensors such as ultrasonic wave sensors and cameras, ultrasonic wave sensors cannot provide accurate information with respect to a surface which is angled relative to the radiative direction of the ultrasonic wave or at an angle involving a curved surface. The stereo cameras can obtain distance information on such a surface configuration. Distance information differs with the type of sensor.

An algorithm is available which evaluates the reliability of environment data obtained from sensors by statistical analysis that avoids such contradictions. (A. Elfes, "Sonar-Based Real-World Mapping and Navigation," IEEE Journal of Robotics and Automation, Vol. RA-3, No. 3, pp 249-265, June 1987; H.F. Durrant-Whyte, "Sensor Models and Multisensor Integration," The Int'l Journal of Robotics Research, Vol. 7, No. 6 pp 97-113, Dec. 1988).

However, these techniques only improve the reliability of sensor data and cannot resolve contradictions generated by information inferred from other sensor data. In other words, sensor data depends on the configuration of the scene, so reliability must be changed for each sensor with relation to the configuration of the scene.

In addition, some objects are very difficult to detect due to sensor characteristics. When sensor data increases with respect to this object, reliability increases to the point where an object does not exist. Reliability with respect to objects is not necessarily improved. Thus, it becomes impossible to accurately grasp the environment. In order to be grasped accurately, the environment must be interpreted for each sensor. If a contradiction emerges in an environment interpreted from multiple sensors, it must be determined which sensor gives an effective interpretation.

Even when information on such an object is insufficient, active sensing has been proposed that uses highly reliable sensor information favorably by predicting an environment from information obtained up to that time, acting based on predictions, and harmonizing predictions and actions by sensors (S. A. Stanfield, "A Robotic Perceptual System Utilizing Passive Vision and Active Touch," The Int'l Journal of Robotics Research, Vol. 7, No. 6, pp 138 - 161, Dec. 1988).

This method provides highly reliable sensor data from an object located outside the dynamic range of sensors or a position that cannot be initially detected by presuming a position favorable for detection and moving a sensor to a different position which is presumed more easily detected by sensors.

However, this method requires a movement plan which enables a sensor to be moved to a position for optimal object detection. It is difficult to devise an effective movement plan from sensor data having low reliability, particularly at initial detection. Consequently, for example, a movement plan for detection prevents the original movement and running of independent mobile robots.

In addition, a similar concept called intentional sensing is available that determines the mechanism of sensing along an intention for recognition (Masatoshi Ishikawa, "Problem of Sensor Fusion," Journal of Japan Robotics Academy, Vol. 8, No. 6, pp 735-742, Dec. 1990).

This method suggests a detection structure in which detection intentions are clearly described in given prior information and in an environment setting and in limited knowledge as to what object is measured with what method, and how given information is employed. This method is limited to the conceptual level, however, and no concrete way for realizing is disclosed.

Accordingly, the present invention provides a device for controlling a mobile robot consisting of: a plurality of sensors of different kinds including at least a sensor which detects the presence of an object and at least a sensor which detects image information related to said object; an interpretation means for interpreting, for each of said sensors, elements of said object based on respective sensor data obtained from said plurality of sensors; a hypothesis generation means to generate a hypothesis expressing a configuration of said object based on said elements of said object interpreted for each of said sensors by referencing a table in which interpretations of said respective sensors with respect to predetermined configurations of objects are stored in advance; and a movement means for moving a mobile robot by using the generated hypothesis.

Although an embodiment of the present invention comprises a plurality of sensors, an embodiment can equally well be realised which does not comprise such a plurality of sensors providing means for receiving data from such sensors is provided.

A further embodiment of the present invention provides a device for moving a mobile robot comprising a plurality of different sensors including a sensor which detects the presence of an object and a sensor which detects image information related to the object; an interpretation means for interpreting, for each of said sensors, an element of said object; a hypothesis generation means for referencing a table in which interpretations of said respective sensors with respect to predetermined configurations of objects are stored in advance, and for generating a hypothesis expressing a configuration of said objects based on the elements of said object interpreted for each of said sensors, verifying a hypothesis generated based on sensor data obtained with the passage of time, and using said verified hypothesis when said hypothesis is correct and discarding said hypothesis when said hypothesis is contradictory; and a movement means for moving a mobile robot by using said hypothesis.

The above hypothesis generation means references a table in which all combinations of interpretations that should be generated are stored for each of said sensors with respect to each of the classified surface configurations of objects determined in advance.

Independent mobile robots require environment recognition based on detected sensor values for safe operation. If one type of sensor is used, recognizable objects and distances are limited, so reliability and the recognizable scope are insufficient.

Therefore an embodiment of the present invention proposes a technique for integrating sensor data obtained from a plurality of different sensors, the data being effective in the environment interpretation for the movement and running of independent mobile robots that operate while avoiding obstacles.

The different sensors comprise, for example, an ultrasonic sensor that obtains distance information as sensor data and stereo cameras that obtains sensor data as three-dimensional information. The sonar is effective in detecting a large surface and can detect a surface element that is an element of an object. The stereo cameras can detect image information related to the object by obtaining three-dimensional information generated by the edge of gray scale variation in images.

Mobile robots are guided by a hypothesis expressing the configuration of an object from sensor data obtained from different sensors. To integrate the sensor data thus obtained, interpretations for each sensor with respect to the configuration of the preliminarily determined object are defined in a table where data from sonar or stereo cameras with the surface configuration of a scene that constitutes an object is assigned a priority. In an embodiment the table is stored in the hypothesis generation means. The hypothesis generation means refers to this table and generates a hypothesis expressing the configuration of the object by means such as using an interpretation obtained from each of the sensors and free from geometrical contradictions based on an element of the object interpreted for each of the sensors. Since this generated hypothesis can be regarded as a map of the surrounding environment, the generated hypothesis can be used for guiding a mobile robot with the movement means.

Sonar may interpret some surface configuration as a surface with an incorrect configuration depending on the surface configuration. The stereo cameras can also obtain three-dimensional information including the surface from the edge of a continuous-tone portion in images. In some cases, it is difficult to reconstitute the surface from this three-dimensional information.

Therefore, the hypothesis generation means generates, from an interpretation for each of the sensors, a hypothesis expressing the configuration of an object based on an element of the object, uses an interpretation generated based on sensor data obtained with the passage of time thereafter, and verifies the hypothesis by referring to a table in which the result of the verification is stored in advance with respect to the configuration of the preliminarily defined object and an interpretation for each of the sensors. When this verified hypothesis is correct, the generated hypothesis is used as is. If the hypothesis is contradictory, the generated hypothesis is discarded and a new hypothesis is generated. Verification of this generated hypothesis is repeated by using an interpretation for each of the sensors.

For example, to integrate information out of sensor data obtained from different types of sensor, such as sonar and stereo cameras, a hypothesis is generated by using an interpretation free of geometrical contradictions from interpretations obtained from each of the sensors. A determination is made preliminarily in a table as to which data is to be assigned priority, data from sonar or from stereo cameras from the object configuration such as the surface configuration of a scene that constitutes this object. A hypothesis that can be regarded as an environment map is used to verify the hypothesis by referring to sensor data that can be presumed to be actual sensor data with respect to the surface configuration of the hypothesis. Consequently, it is difficult to reconstitute the surrounding environment from sensor data. It is easy to presume sensor data obtained at this time from a hypothesis such as an environment map expressing the surrounding environment. Consequently, mobile robots are moved by regarding the generated hypothesis as a surrounding environment map. The hypothesis is verified by using sensor data obtained with the passage of time during movement. If contradictions are found, the hypothesis is discarded and another interpretation is adopted for use as a new hypothesis.

In this way, hypothesis verification is repeated and a hypothesis generated which corresponds to the surrounding environment. Thus, the surface configuration is obtained from stereo cameras and the existence of the surface is obtained from sonar sensor data, which makes it possible to compensate for the shortcomings of each of the different types of sensor.

The previously generated hypothesis can be verified with sensor data obtained with the passage of time. Otherwise, the hypothesis can be verified by generating a hypothesis each time sensor data is obtained.

Thus an embodiment integrates ambiguous data from multiple sensors. Hypothesis verification can be repeated and the certainty of the environment interpretation improved. It is very important to recognize whether or not an object surface that becomes an obstacle is present on or around the route where the mobile robot operates. The robot does not strictly recognize the environment, such as what the object is. The robot does not act to recognize the object and real-time sensing can be obtained in robot running and movement.

The hypothesis generation means can refer to a table in which all combinations of interpretations are stored in advance that should be generated for each of the sensors with respect to each of the classified surface configurations by classifying the configuration of the object defined in advance with the surface configuration.

An embodiment of the present invention is described hereafter in conjunction with drawings in which:
Figure 1 is a block diagram of the controller, including a hypothesis verification device in one embodiment of the present invention;
Figure 2 is a perspective view of a mobile robot;
Figure 3 is a view of the sonar ring devices;
Figure 4 is a line view of the sonar ring devices and stereo cameras detection region;
Figure 5 is an image explaining the detection of an error by the sonar ring devices;
Figure 6 is a block diagram of the data flow at verification of a hypothesis with the passage of time;
Figure 7 is a view explaining the hypothesis and verification thereof with respect to a plane with the passage of time, before and after mobile robot movement respectively;
Figure 8 is a view explaining the hypothesis and verification thereof with respect to a projecting surface with the passage of time, with (A) showing the state before mobile robot movement and (B) that after movement;
Figure 9 is a view explaining the hypothesis and verification thereof with respect to a recessed surface with the passage of time, with (A) showing the state before mobile robot movement and (B) that after movement;
Figure 10 is a view explaining the hypothesis and verification thereof with respect to a small surface with the passage of time, with (A) showing the state before mobile robot movement and (B) that after movement; and
Figure 11 is an image explaining the acquisition of three-dimensional data by stereo cameras showing (A) the front of a door, (B) the processed image, and (C) a synthesis of (B).

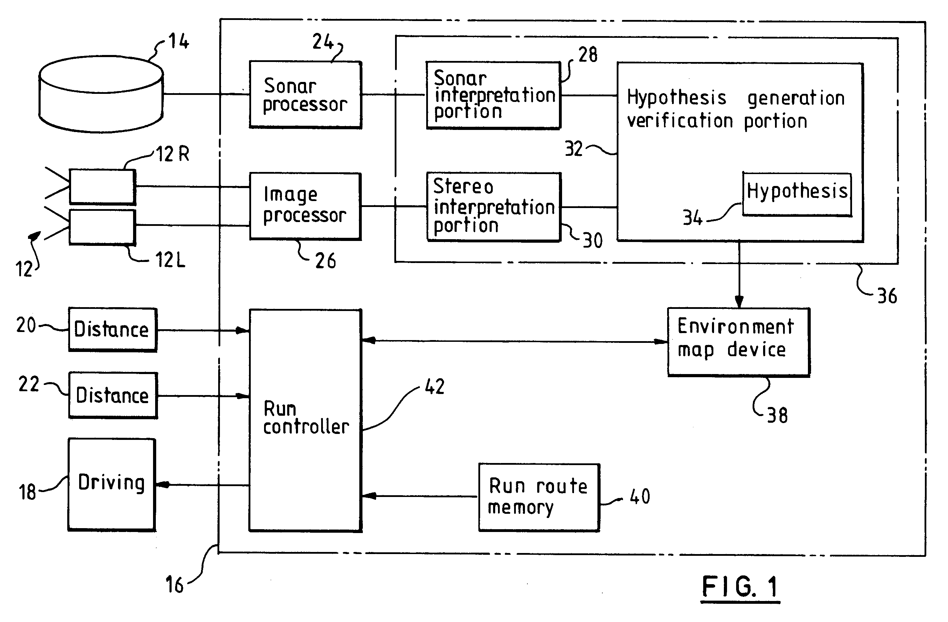

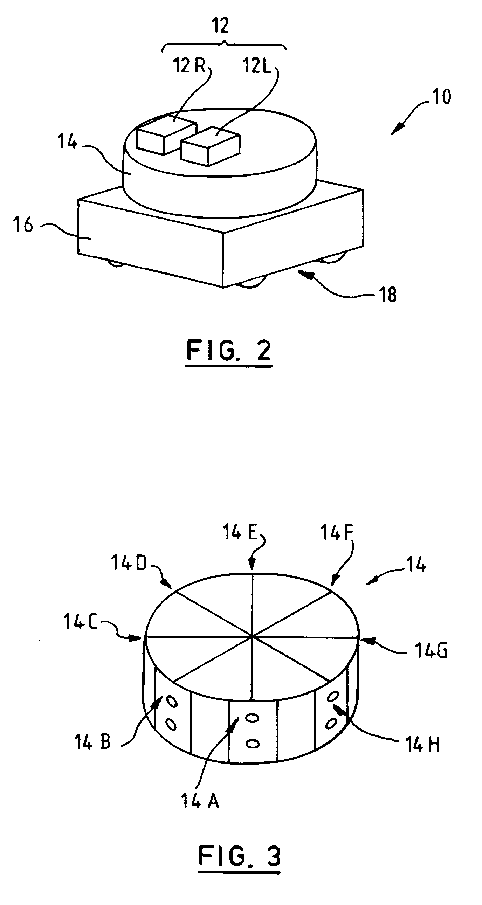

As shown in Figure 2, the mobile robot (10) has different types of sensor that detect different states, sonar ring device (14) obtains sensor data as distance information to an object by using ultrasonic waves, and stereo cameras (12) obtain sensor data as three-dimensional information by using stereo vision with two cameras (12R) and (12L) (described hereinafter in detail). In addition, the mobile robot (10) includes a controller (16) consisting of a microcomputer or the like for generating and verifying a hypothesis with respect to the surrounding environment based on signal data from the sonar ring devices (14) and stereo cameras (12) and a run device (18) driven by signals from the controller (16). The run device (18) has a distance meter (20) for measuring the run distance of the mobile robot and a direction meter (22) for measuring the direction of the mobile robot (Figure 1).

The base line of the stereo cameras (12) is 15 cm long. The stereo cameras (12) are disposed so that optical axes (12R and 12L) of the cameras run parallel to each other, and the cameras are inclined at an elevation angle of 18 degrees with respect to the horizontal distance. The stereo cameras are disposed so that, for example, a front area of 5 m of the floor is a sight that can be photographed. They enable the obtaining of an image (stereo vision) similar to human vision. Cameras (12R and 12L) are connected to the controller (16). Since the sonar ring device (14) detects an object via sound, 8 sonar devices (14A to 14H) having sound senders above directed toward the firing direction and receivers below are equally spaced angularly in a ring configuration (Figure 3). The sonar ring devices (14) are connected to the controller (16).

As shown in Figure 1, the controller (16) consists of a sonar processor (24), an image processor (26), a hypothesis verification device (36), an environment map (38), run route memory (40), and a run controller (42). The hypothesis verification device (36) consists of a sonar interpretation section (28), a stereo interpretation section (30), and a hypothesis formation and verification device (32) having hypothesis memory (34).

The sonar ring device (14) is connected to the sonar processor (24) to process each of the sonar devices (14A to 14H). The sonar processor controls each of the sonar devices (14A to 14H) such that they respectively transmit ultrasonic waves separated by a delay of 25 ms to prevent interference by the ultrasonic wave generated by the other adjacent sonar sensors. The transmission frequency is 40 kHz and can measure the distance to an object within a range of 3.0 to 0.1 m. The sonar processor (24) is connected to the sonar interpretation section (28).

The directivity of sender-receivers in each sonar devices (14A to 14H) is not acute, unlike light. An ultrasonic beam dissipates and expands in width when transmitted through air. When the distance of the reflection surface is measured with this wide beam, the direction along the reflection surface can be measured only to an accuracy of the order of the beam width. Even when the beam is reflected on the surface at one point, the surface can be detected on any of the spherical surfaces corresponding to the beam width. In this way, each sonar device has a detection area whose size is proportional to the distance to an object.

Consequently, the detection area where an object around the robot (10) can be detected is given as detection area Vi in the stereo cameras (12), whereas it is given as detection area Sr in the sonar ring device (14).

The image processor (26) is connected to cameras (12R and 12L) of the stereo cameras (12) to process an image photographed by the cameras (12R and 12L). This processing provides three-dimensional information from each type of image information (video signals or the like) by means of stereo vision formed by cameras (12R and 12L) arranged as shown above. This image processor (26) is connected to a stereo interpretation section (30) in the hypothesis verification device (36).

Three-dimensional information is obtained with this stereo vision at the edge where the brightness of the image changes abruptly. In addition, the horizontal arrangement of the two cameras enables the obtaining of an image corresponding to an edge which is not planar. However, it is still impossible to obtain an image corresponding to the portion between images at a horizontal edge. Three-dimensional information can then be obtained at a horizontal edge by the correspondence to the end point of the horizontal edge.

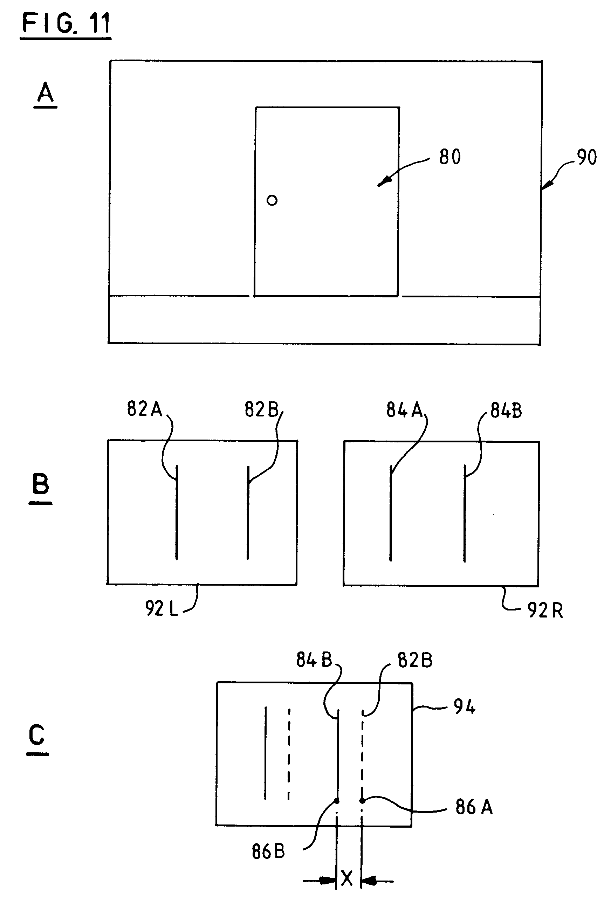

For example, suppose that a door (80) is photographed as an object assuming an image (90) of the front as shown in Figure 11 (A). Each camera (12R and 12L) photographs the door (80), but the photograph locations of the two cameras are displaced from each other due to the horizontal arrangement. Consequently, image information is processed in a procedure such as differentiation or the like to select an edge where the brightness abruptly changes in the horizontal direction. Thus, as shown in Figure 11 (B), the image (92R) processed by the one camera (12R) and the image (92L) processed by the other camera (12L) can be provided. In other words, in the processed image (92R), the portion where brightness in the vertical direction of the door (80) can be obtained as a line segment (82A and 82B). Thus, as shown in Figure 11 (C), an image (94) formed by synthesizing processed images (92R and 92L) end points (86A and 86B) should correspond. Spacing between line segments (82B and 848) corresponds to a distance up to the door (80). The line segment obtained from line segments (82B and 84B) forms three-dimensional information. The line segment may be described by a position at which the displacement of images is corrected. Otherwise, either line segment (82B or 84B) may be used.

The hypothesis verification device (36), described in detail later, generates a hypothesis with respect to an environment surrounding the mobile robot (10) from the surface component of an object interpreted at a sonar interpretation section (28) based on sensor data (hereinafter referred to as sonar data) of the sonar ring device (14) and the configuration of the object interpreted at a stereo interpretation section (30) based on sensor data (hereinafter referred to as stereo data) of the stereo cameras (12).

A distance meter (20) and a direction meter (22) are connected to the run controller (42) to specify the current position and direction of the mobile robot (10). In addition, an environment map device (38) and run route memory (40) are connected to the run controller (42). The environment map device (38) stores the surrounding environment map formed by the hypothesis generated at the hypothesis verification device (36). This environment map provides a two-dimensional map as seen when viewed from above. Run route memory (40) stores the run route of the mobile robot (10) input in advance by operators or the like. The run controller (42) thus controls the run device (18) to move the mobile robot (10) while avoiding an obstacle present on the run route by referring to the running route stored in run route memory (40) and by referring to the environment map obtained from the environment map device (38).

The movement of the mobile robot (10) according to the embodiment is explained next, together with the movement of the hypothesis verification device (36). First, the sonar interpretation section (28) of hypothesis verification device (36) interprets sonar data, whereas the stereo interpretation section (30) interprets stereo data.

The interpretation of this sonar data is explained below. Since the directivity of each sonar device is not as sharp as that of light, as described above, distance information provided by the sonar ring device clarifies that a surface is detected as a spherical portion corresponding to the beam width.

However, the cycle time for detection by the sonar ring device (14) is extremely rapid compared to the speed of mobile robot movement. Since distance information obtained during movement can be obtained densely in a continuous form with the passage of time, information can be integrated as a planar surface component. A determination is made as to whether fine surface elements obtained at continuous sampling points can be connected when the movement of the mobile robot (10) is offset. When the distance in the center of fine surface elements is either equal to the threshold value or less, the distance is integrated as a continuous surface component. At this time, the adjustment of receiver sensitivity may provide noise that is generated independently. If sonar data such as distance data or the like cannot be obtained at a plurality of sampling points that continue with the passage of time, fine surface elements can be eliminated as noise.

Since the environment map is described as a two-dimensional map when viewed from above, the surface component is described as line segment data, which is registered at the starting and end points. When fine surface elements are obtained that can be connected at four or more continuous sampling points, the line segment is obtained with the minimum self-multiplication method to register, as a surface component, the intersection point of vertical lines that come down from both ends to the line segment.

The sonar ring device (14) detects an object by using sound waves as a medium. Thus, the devices (14) have the following characteristics: Even if an ultrasonic wave may come from any direction to the surface of the object when an uneven 50-angstrom surface (surface roughness) of an object (50) (hereinafter referred to as an object surface) changes irregularly on the order of the wavelength of the ultrasonic wave, part of the scattered wave returns in the direction of sending of the ultrasonic wave, thereby making it possible to obtain distance data. However, if the uneven 50-angstrom surface is one digit shorter than the wavelength of the ultrasonic wave, the surface of the object acts as a mirror to reflect the ultrasonic wave.

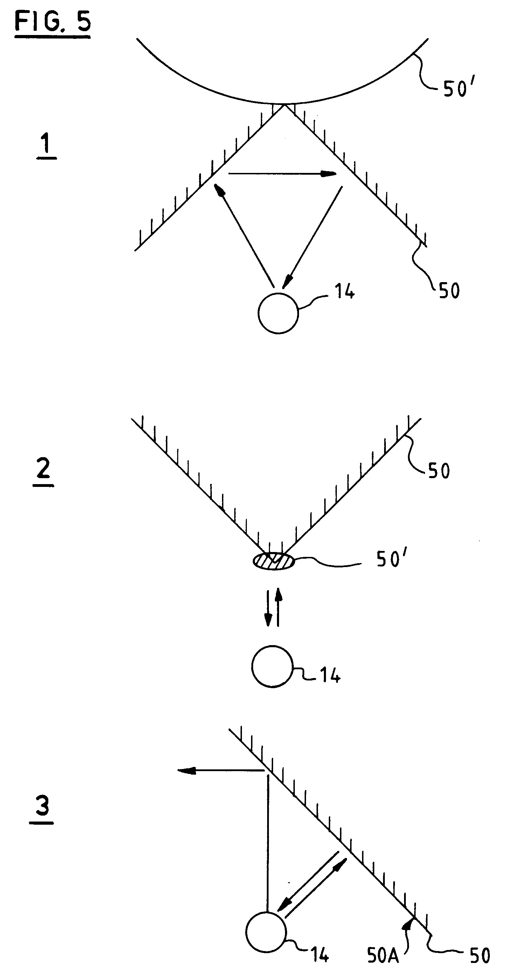

Consequently, as shown in Figure 5 (3), the mobile robot can receive a reflected wave from the surface of an object located at right angles or at an angle to the direction of ultrasonic wave radiation by means of one sonar device. However, the robot cannot obtain the reflection wave from a surface having an inclination larger than a particular angle, with the result that data received becomes the same as data in free area (space). Furthermore, another sonar device cannot detect the reflection wave. As a result, even when the registered surface component is interpreted to be free area from sonar data from distant sampling points, this interpretation is not to be discarded.

In addition, accurate data cannot be obtained from the sonar ring devices (14) even when the surface configuration is given as follows:

As shown in Figure 5 (1), since the radiated ultrasonic wave is reflected at two facing surfaces in a recessed corner and returned back to the receiver, distance data can be obtained from a position far from the actual object (reference numeral 50'). Furthermore, as shown in Figure 5 (2), when the projecting angle corner is present as an object, the reflected wave can be obtained only at the tip of the projecting angle corner (reference numeral 50'), whereas no sonar data can be obtained from other areas, which become the same as free area. In such a case, it is impossible to obtain an accurate interpretation from sonar data alone without tracing the surface.

The interpretation of stereo data is explained as follows. Stereo data obtained from two cameras is only three-dimensional information along an edge. It is impossible to obtain data from a surface where the brightness changes smoothly on the image (Figure 11). Consequently, a three-dimensional line segment is assumed connected to the surface, but it is not apparent where the line segment is actually present. As explained above, the edge in the processed image is a place where the direction of the surface (normal line) suddenly changes, i.e. a boundary line whose one surface cannot be seen from the camera, or a mark or shadow drawn on the surface. Thus, reconstituting the surface from the three-dimensional line segment requires information on which side the surface linked to the three-dimensional line segment is located and other three-dimensional line segment adjacent to another three-dimensional line segment on the image, but the three-dimensional line segment is rough. Although used to reconstitute the surface, a plurality thereof cannot be always obtained at the same time.

Here, a surface that becomes an obstacle to running of the mobile robot (10) in an indoor environment often stands vertically. In this embodiment, a vertical surface including three-dimensional line segments is adopted as one interpretation. When the door (80) in Figure 11 is taken as an example, two three-dimensional line segments can be obtained. For simplicity, these two three-dimensional line segments are defined as line segments (82A and 82B). Because the vertical surface including these line segments (82A and 82B) overlaps, it can be inferred that one surface occupying space between line segments (82A and 82B) is present.

In addition, when a three-dimensional line segment is obtained, the line is simply drawn on the floor surface in some cases. Thus, this three-dimensional line segment can be interpreted two ways: it can be interpreted so that a surface including this three-dimensional line segment is present, or it can be interpreted so that the line segment is simply drawn on the floor surface.

Since many vertical surfaces including this three-dimensional line segment can be considered from a plurality of vertical three-dimensional line segments, the surface located nearest to the mobile robot is interpreted as stereo data. In addition, if the line segment is severed at the boundary of the field of view, or the image frame, it can be inferred that this line segment extends beyond the scope of the field of view.

Hypothesis formation in the hypothesis generation verification portion (32) based on sonar and stereo data is explained next. In this embodiment, stereo data obtained from the stereo cameras and sonar data such as direction and distance data obtained from the sonar ring devices are dealt with in accordance with the following rules:
(1) A hypothesis about the environment is generated from an interpretation that can be considered to be safe for running the mobile robot with respect to a plurality of interpretations obtained from a plurality of different data.
(2) Both interpretations obtained when detected by each sensor and interpretations extended based on sensors when not detected, if not contradictory to sensor data, are also adopted for hypothesis formation.
(3) The mobile robot is moved based on a hypothesis which is verified by referring to sensor data with the passage of time obtained in the movement thereof to the hypothesis.
(4) If sensor data is contradictory to the hypothesis, the hypothesis is discarded and a hypothesis is formed again from remaining interpretations.

Consequently, as a result of integration, a hypothesis can be obtained having a high degree of certainty consistent with verification data.

In mobile robot running and movement, since collision by the robot must be avoided at all costs, priority is given to the interpretation of surface components which are safe for the robot. Hence, as interpretation of stereo data (three-dimensional data) by means of the stereo cameras, two interpretations are possible: a surface and a drawn line segment. If stereo data are not verified (details are given later), the surface interpretation is adopted as a hypothesis. If the detection areas of the sonar ring device (14) and stereo cameras (12) do not overlap, interpretations of both sensors are adopted, as is, as a hypothesis. Larger surface components are registered in the hypothesis. In determining whether these interpretations are the same or not, an interpretation nearer to the position of the mobile robot is adopted when the maximum value of the distance made by drawing a vertical line from the shorter line segment to the longer line segment does not exceed the threshold value, or when the distance between the two line segments is not less than the threshold value. In hypothesis generation, surface components are integrated only, and no determination is made about whether or not the hypothesis is contradictory. The above processing is equivalent to a method for collecting data nearest to the mobile robot. This embodiment thus provides a way to discard an incorrect interpretation in verification to approximate the hypothesis to an accurate environment map. It is this point that differs sharply from conventional methods in which an incorrect interpretation cannot be discarded.

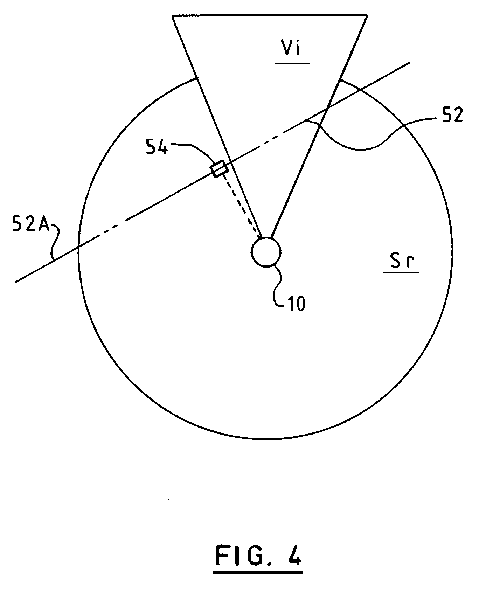

Here, the sonar ring devices (14) and the stereo cameras (12) have mutually different areas of detection (Figure 4). The ease of sensor detection differs greatly from one object to another. For example, the sonar ring devices (14) cannot interpret surface components without moving and cannot detect distant surfaces. The stereo cameras (12) can, in contrast, obtain a three-dimensional edge farther away than the sonar ring devices (14). Since tne direction in which stereo data can be obtained is limited, the reliability of interpretation of the surface from a single three-dimensional edge is very low. Because sensor properties differ, simply interpreting the environment directly from data from each sensor prevents the result of these interpretation from being integrated effectively.

A large surface component is thus required to integrate data from a plurality of different sensors for use in running a robot. Thus, in addition to direct interpretations based on obtained sensor data, a determination is made including the region outside the scope of sensor detection, as explained later. For example, as shown in Figure 4, when extensible three-dimensional line segment (52) is interpreted as a surface, and surface component (54) from sonar on line segment 52 is reflected from the surface, the portion from line segment (52) within the stereo cameras (12) range up to surface component (54) is interpreted as a long line segment. The determination of whether or not interpretations from different types of sensors are bound or not is made when data in an attribute that can be extended beyond the scope of eyesight in the stereo interpretation and the maximum distance up to a point on the extended line segment or to the line segment is within the scope of the threshold value.

When the robot moves, it avoids an obstacle by referencing the current environment. If an interpretation of sensor data does not agree with the current hypothesis during movement, the hypothesis is discarded as explained later and the robot is moved optimally with respect to the hypothesis based on a new interpretation.

Verification of the hypothesis generated in accordance with the above method is explained below. The bottom-up method, which reconstitutes an environment from sensing data, is ambiguous in interpretation, making it difficult to obtain an accurate environment map. The top-down method, which involves presuming sensing data from the environment map, is easy to apply because the properties of individual sensor data are already known.

In this particular embodiment, the hypothesis is regarded as an environment map. Sensing data that can be presumed with respect to the hypothesis is checked against actually detected sensing data, then a determination made on whether or not the hypothesis is to be discarded based on the result presumed in advance. Initially, priority is given to the sensor with respect to the combination of sensor data presumable from the sonar ring devices (14) and the stereo cameras (12) for each surface configuration. A table is prepared in which conclusions are made on whether a hypothesis is to be discarded (Table 1).

| Surface configuration | Ref. No. | Interpretation based on stereo data | Interpretation based on sonar data | Hypothesis | |
|---|---|---|---|---|---|
| Planar | (1) | Surface component | Surface component | Planar | |
| | (2) | Surface component | Surface component | Free space | |
| | (3) | No surface component | No surface component | Planar | |
| | (4) | No surface component | No surface component | Free space | |
| Projecting | (5) | - | Surface component near projecting surface | Projecting surface | |
| | (6) | - | No surface component | Free space | |
| Recessed | (7) | - | Surface component near deepest part | Recessed surface | |
| | (8) | - | No surface component | Free space | |
| Elongated or fine | (9) | Surface component | Surface component | Elongated/fine surface | |
| | (10) | Surface component | No surface component | Judged by size and distance | |
| | (11) | No surface component | No surface component | Elongated/fine surface | |

| TABLE 1 | | | | |
|---|---|---|---|---|
| | | | | |

Since only the surface component is described in the hypothesis, if no corresponding hypothesis (null) is present at the surface component position in the interpretation of sensor data, no verification is made and a new hypothesis based on sensor data is generated. When a hypothesis corresponds to the sensing data position, however, verification is made corresponding to the surface configuration of the hypothesis.

Since the sonar ring devices (14) obtain only small surface components in a short time, the surface configuration in the hypothesis uses only the surface component obtained from the stereo cameras (12) and a large surface obtained by binding interpretations in hypothesis generation. Consequently, as opposed to a hypothesis for a uniformly large surface, the four different results of verification shown in Figure 1 can be presumed from the combination of interpretations from the sonar ring devices (14) and stereo data (12). However, in the interpretation of sensor data from the sonar ring devices (14), the verification is made based on the interpretation from the sonar device located vertically with respect to the surface or located within the threshold value. Sonar data having an angle with respect to other surfaces is not used in verification, however. As shown in Table 1, priority is given to interpretation using sonar data in hypothesis verification based on a uniformly large surface.

For example, Reference (2) in Table 1 is to discard the surface interpretation with respect to the line segment drawn on the floor in the interpretation of stereo data, whereas Reference (3) is to conclude a correct interpretation with respect to a glass surface. Reference (4) concludes that the large surface component binding the interpretation in the hypothesis formation is incorrect.

Verification of projecting and recessed surfaces is considered next. Projecting and recessed surfaces can only be obtained when a hypothesis generated from a stereo interpretation is adopted. In the case of these two surfaces, then, the interpretation of stereo data need not be considered in verification: that is verification is based only on sonar data. In Reference (5) in Table 1, the surface of the projecting configuration is confirmed when sonar shows the surface component to be present near the projecting surface. If sonar shows no surface component (Reference (6)), stereo data interpretation is treated as a line segment drawn on the floor surface and the hypothesis is discarded.

Similarly, in Reference (7) in Table 1, the surface of the recessed configuration is confirmed when the surface component from sonar is present near the deepest area of the recessed surface. If, however, a surface component from sonar cannot be obtained (see Reference (8)), the stereo data interpretation is treated as a line segment drawn on the floor surface, and the hypothesis is discarded.

Verification of elongated and fine surfaces is considered next. When an elongated or fine surface is based on the sonar interpretation in the hypothesis, the hypothesis is not discarded, regardless of whether or not a surface is present in the stereo interpretation (References (9) and (11)). When stereo data yields a surface interpretation, however, and no surface is obtained from sonar, a conclusion is drawn as to whether or not the hypothesis is to be discarded based on the ostensible size of the surface and the distance to it (Reference (10)).

The hypothesis and processing of the above verification is carried out using sensor data obtained with the passage of time. Data from the sonar ring devices (14) and stereo cameras (12) are interpreted at different sampling times; sonar data is obtained in a shorter cycle time than stereo data. Since the above hypothesis generation and verification are done each time sensor data is obtained, hypothesis generation and verification are done based either only on sonar data or on both sonar and stereo data. Each sensor data item is obtained continuously along with mobile robot movement.

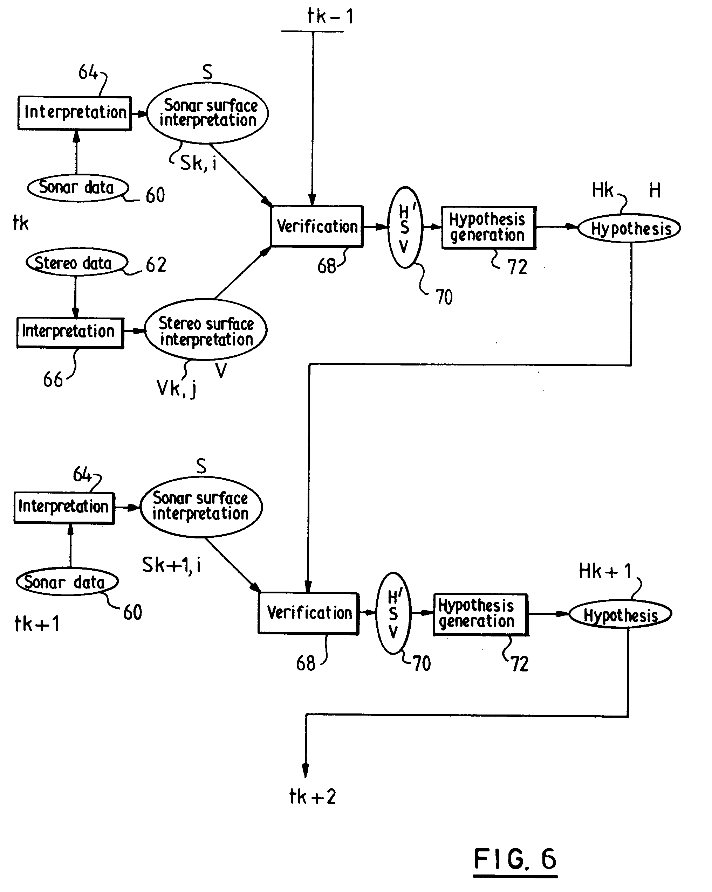

As shown in Figure 6, both sonar and stereo data can be obtained at time t_{K}, presumed where hypothesis generation and verification are done. Sonar data (60) are obtained within the scope of distance measurement (detection region Sr in Figure 4). Stereo data (62) are obtained within the scope of the visual range (detection region Vi in Figure 4). Sonar data (60) are used in interpretation (64) at sonar interpretation section (28) (Figure 1) to yield interpretation data S_{k,i} (i=1, 2, --- , 8 = total number of sonar devices) interpreted as a surface component. Stereo data (62) are used in interpretation (66) at stereo interpretation section (30) to yield interpretation data V_{k,j} (j=1, 2, --- number at which the total number of edges is obtained) interpreted as a surface component. Sonar data item (60) and stereo data item (62) provide a plurality of surface components. Attributes are then attached to all interpretation data S_{k,i} and V_{k,j} which indicate whether data is adopted in the hypothesis or already discarded at that point. In other words, interpretation data S_{k,i} and V_{k,i} are integrated to verify hypothesis Hₖ₋₁ immediately before integration. When, next, verification (68) is done, a determination is made as to whether hypothesis Hₖ₋₁ agrees with the surface component formed by sonar and stereo data, with the result that the part of hypothesis Hₖ₋₁ which does not agree with the surface component is discarded, yielding data (70) which integrates the remainder of (agreed) hypothesis Hₖ₋₁ and current interpretation data Sₖ₋ᵢ and V_{k,i}. Using integration data (70), hypothesis generation (72) is done to generate new hypothesis H_{K}. In hypothesis Hₖ, interpretation data S_{k,i} and V_{k,i} are associated to clarify which interpretation is reflected. At time t₀, when the mobile robot (10) is first moved, any prior hypothesis is null so that only integration of interpretation data S_{o,i} and interpretation data V_{o,j} obtained from detected sensor data generates hypothesis H₀.

At time tₖ₊₁, immediately after integration, sonar data are obtained in a shorter cycle time than stereo data, as described above. Thus, hypothesis generation and verification are done based only on sonar data. Initially, interpretation (64) is made using obtained sonar data (60) to yield interpretation data S_{k+1,} ᵢ, interpreted as a surface component. In verification (68), interpretation data S_{k+1, i} is used to verify hypothesis Hₖ at time tₖ immediately before integration. In other words, a determination is made whether or not hypothesis Hₖ agrees with the surface component formed by sonar and stereo data assumed from the hypothesis immediately before integration. The part of the surface component disagreeing with hypothesis Hₖ₋₁ is discarded, and data (70) are obtained to integrate the remainder of (agreed) hypothesis H_{K} and current interpretation data S_{k+1,i}, V_{k, j}. Hypothesis generation (72) is done using integrated data (70) to generate a new hypothesis. In hypothesis Hₖ₊₁, interpretation data S_{k+1,i} are associated to clarify which is reflected. Similarly, hypothesis verification and generation are done with the passage of time.

Hypothesis verification with the passage of time is detailed giving a concrete example.

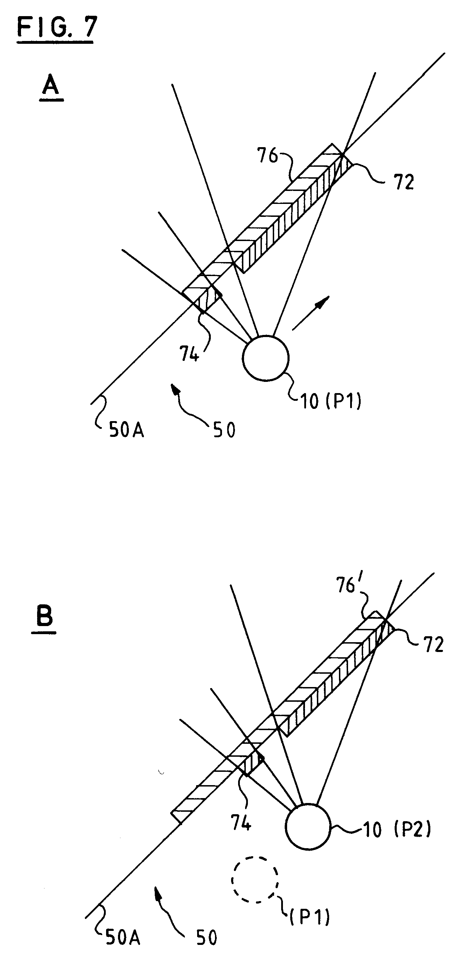

As shown in Figure 7 (A), when a large surface such as a wall or the like is near a mobile robot (10), extensible three-dimensional line segment (72) interpreted as a surface by stereo data and a surface component obtained from sonar data are given at current position P1 to interpret as a flat surface, given as a hypothesis, a long line segment that continues to surface component (74) on the extension of line segment (72). The flat surface given as hypothesis (76) is verified at position P2 to which the mobile robot (10) moves after a predetermined time and the hypothesis of a large surface is generated. This yields three-dimensional line segment (72) from stereo data and surface component (74) from sonar data. Since line segment (72) and surface component (74) correspond to a previous hypothesis (76), previous data is interpreted as correct. A new hypothesis reflecting the previous hypothesis using a flat surface extended from hypothesis (76) given as the previous flat surface is then generated. As shown in Table 1, even when no surface is interpreted from stereo data with respect to the hypothesis at this time, interpretation is made with respect to the glass surface, thus concluding the surface for the interpretation of each sonar device.

Obtaining projecting and recessed surfaces with a hypothesis is limited to where the hypothesis generated from the interpretation of stereo data is used, as seen from Table 1 above. Therefore, if the area around the mobile robot (10) is a projecting or recessed surface, this surface should be interpreted from stereo data in the hypothesis generation phase.

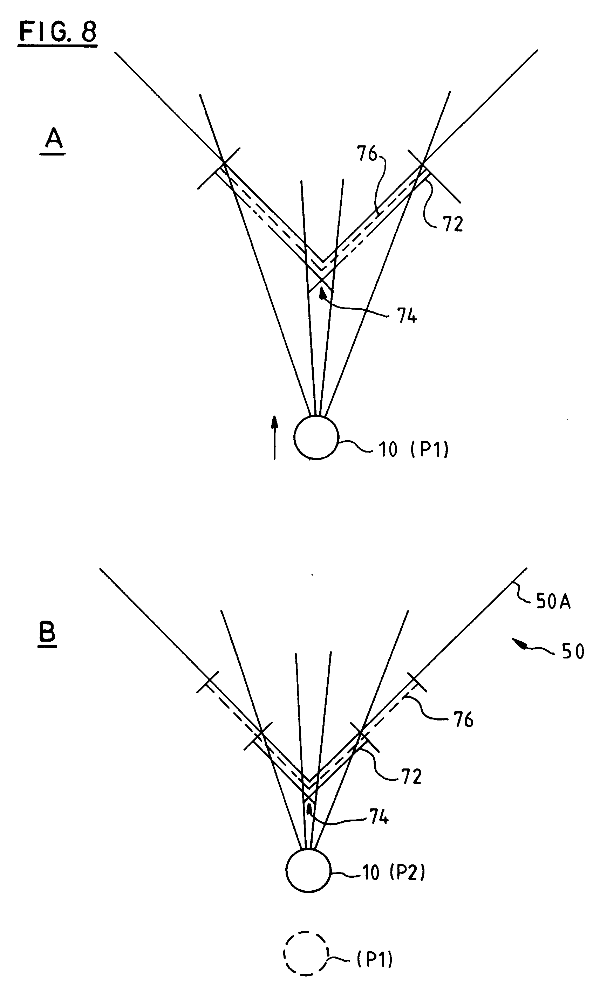

In verification of the hypothesis for a projecting surface, it is assumed that a hypothesis in which an area is interpreted as a projecting surface has been verified when the interpretation of sonar concentrates only on the top end. That is, as shown in Figure 8 (A), at current position P1, surface component (74) is expected to be the top end of the projecting surface from sonar data, and three-dimensional line segment (72) is obtained from stereo data. Thus, hypothesis (72) is obtained as a projecting surface. Hypothesis (72) is verified, as shown in Figure 8 (B), for position P2 after movement in a predetermined period of time. That is, surface component (74) for the top end of the projecting surface in the hypothesis generated by sonar data can be also obtained at position P2 after mobile robot movement (10), and three-dimensional line segment (72) is obtained from stereo data so that previous hypothesis (76) is verified to be correct.

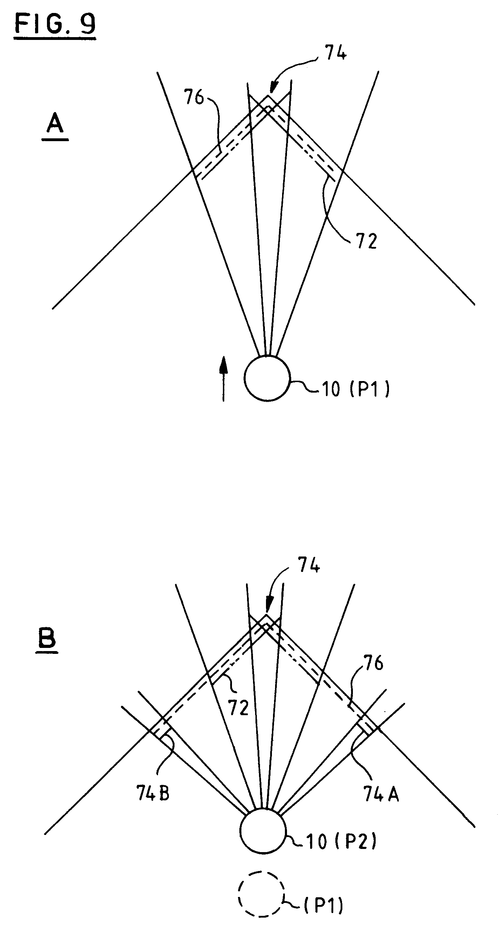

In verification of the hypothesis for a recessed surface, it is assumed that a hypothesis in which an area is interpreted as a recessed surface has been verified when surface elements are interpreted around the mobile robot (10) and at its sides. That is, as shown in Figure 9 (A), at current position P1, surface component (74) at the top end of the recessed surface is obtained from sonar data, and three-dimensional line segment (72) is obtained from stereo data. Thus, a hypothesis as a recessed surface is generated. Hypothesis (72) is thus verified, as shown in Figure 9 (B), for position P2 after movement in a predetermined period of time. That is, at position P2 after movement of the mobile robot (10), surface component (74) at the top end of the projecting surface can be obtained from sonar data from one sonar device, and opposing surface components (74A) and (74B) can be obtained from sonar data from another sonar device. Three-dimensional line segment (72) can also be obtained from stereo data. Therefore, similar to the verification of a flat surface, three-dimensional line segment (72), surface component (74), and other surface components (74A) and (74B) correspond to previous hypothesis (76), so that hypothesis (76), that the surface is the recessed surface generated previously, is verified to be correct.

If no sonar surface component was obtained in verification at hypothesis generation for the projecting and recessed surfaces above (Figures 8 (B) and 9 (B)), interpretation of stereo data is regarded as a line segment drawn on a floor surface, and interpretation of projecting and recessed surfaces constituting the previous hypothesis is discarded.

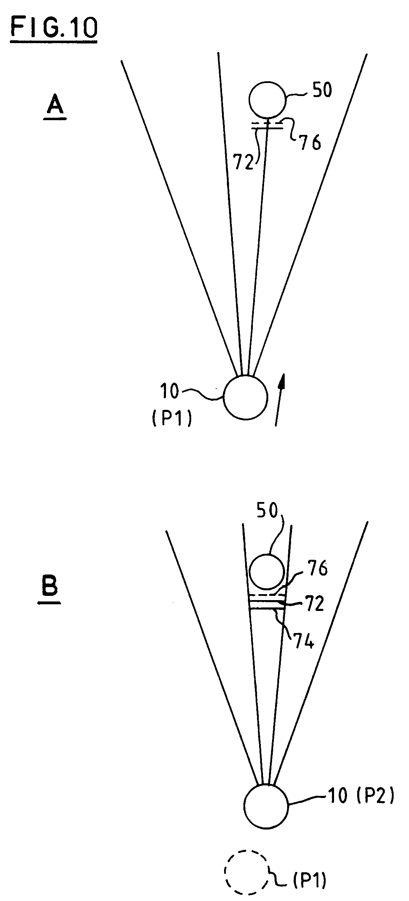

Verification of the hypothesis with respect to an elongated object and a small surface object are explained next. As shown in Figure 10 (A), the hypothesis generated at current position P1 provides three-dimensional line segment (72) from stereo data interpreted as an elongated or small surface. Since no surface component is obtained from sonar data in interpretation, the interpretation is made that the object is remote. Thus, the object surface constituting stereo data is regarded as hypothesis (76). As shown in Figure 10 (B), hypothesis (76) is verified at position P2 after the mobile robot (10) moves for the predetermined time. In other words, at position P2 after the mobile robot (10) moves, the distance to the surface becomes shorter, and surface component (74), which can be regarded as a surface, is obtained from sonar data to verify that the hypothesis of a small surface formed from stereo and sonar data is correct. Thus, the hypothesis that the surface is small obtained from stereo and sonar data is verified to be correct.

As described above, the hypothesis is generated from stereo vision from the stereo cameras and sensor data obtained from each sonar device using sonar ring devices to verify the hypothesis from stereo data after movement and an interpretation from sonar data. It is then determined whether the hypothesis is adopted or not. If the hypothesis is discarded, a new hypothesis is generated. Even when the hypothesis is generated, new data is added and the hypothesis is expanded with the new data included.

A hypothesis is then generated from the interpretation obtained from a plurality of different data with the result that, even if the first hypothesis is ambiguous, an environment can be detected from an angle different from the first with the movement of the mobile robot. A hypothesis with high certainty can then be obtained by verifying data obtained with the passage of time. An obstacle can then be detected before the mobile robot attains the point nearest to the obstacle, thereby enabling safe, efficient robot movement.

Sensor data obtained by a plurality of different sensors is integrated to enable overall recognition of the environment and an easy understanding of the real-time run environment in actual mobile robot movement.

This embodiment is intended for mobile robot movement by emphasizing the recognition of whether or not an object surface is present on the route or a nearby area such that an object is in the way of mobile robot movement. Strict environment recognition is needed to determine what the object is. Unlike in active sensing, movement is not confirmed for an ambiguous interpretation. Interpretation is renewed based on data obtained in avoidance movement. Even when the interpretation remains ambiguous, the object is avoided, and data on the route point passed by the mobile robot is discarded. Thus, sensor detection data is done in real time in mobile robot movement.

In the above embodiment, distance and direction meters use data, but the present invention is not limited to such cases. Only sensor data obtained by the sonar ring devices and stereo cameras may also be used to determine distance and direction.

The above hypothesis verification device is effective with a mobile robot which determines the movement region in advance for free movement in the region while preparing an environment map. Needless to say, the present invention can be applied to a mobile robot which can run independently by designating the predetermined area with starting and end points to move independently and for the shortest distance.

In the above embodiment, a robot using different types of sensor such as sonar and stereo cameras was explained. The present invention is not limited, however, to such examples. Infrared ray, laser, heat ray, or any other sensor obtaining three-dimensional information through a combination of the above sensors may be used.

## Claims

1. A device for controlling a mobile robot consisting of:
a plurality of sensors (12, 14) of different kinds including at least a sensor which detects the presence of an object and at least a sensor which detects image information related to said object;
an interpretation means (28, 30) for interpreting, for each of said sensors, elements of said object based on respective sensor data obtained from said plurality of sensors;
a hypothesis generation means (32) to generate a hypothesis expressing a configuration of said object based on said elements of said object interpreted for each of said sensors by referencing a table in which interpretations of said respective sensors with respect to predetermined configurations of objects are stored in advance; and
a movement means for moving a mobile robot by using the generated hypothesis.

2. A device as claimed in claim 1, further comprising:
means for verifying said hypothesis generated obtained with the passage of time, and using said verified hypothesis when said hypothesis is correct and discarding said hypothesis when said hypothesis is contradictory; and
a movement means for moving a mobile robot by using said hypothesis.

3. A device as claimed in either of claims 1 or 2 wherein said hypothesis generation means classifies said configurations of objects stored in advance by figure of its surface, and said table stores all combinations of interpretations to be generated for each of said sensors for each said classified surface figure.
